# EUROPEAN PATENT SPECIFICATION

(11) **EP 1 342 983 B1**
(45) Date of publication and mention of the grant of the patent: **08.09.2010**
(21) Application number: 03004850.8
(22) Date of filing: 05.03.2003
(51) Int. Cl.: G01B 7/30, G01D 5/16, G01D 5/165, G01D 11/02

(54) **Rotary sensor**
Drehgeber
Capteur de rotation

(30) Priority: 07.03.2002 JP 2002062734
(43) Date of publication of application: 10.09.2003
(73) Proprietor: ALPS ELECTRIC CO., LTD., Tokyo 145-8501 (JP)
(72) Inventor: Terui, Kyuichiro, Ota-ku, Tokyo 145-8401 (JP); Okumura, Hirofumi, Ota-ku, Tokyo 145-8401 (JP); Nakamura, Moritoshi, Ota-ku, Tokyo 145-8401 (JP)
(74) Representative: Klunker . Schmitt-Nilson . Hirsch

(56) References cited:
- EP-A- 1 176 397

## Description

### Background of the Invention

The present invention relates to a rotary sensor according to the preamble of claim 1. A sensor of this typ is known from EP-A-1 176 397.

An explanation will be given to the conventional rotary sensor according to EP-A-1 176 397.

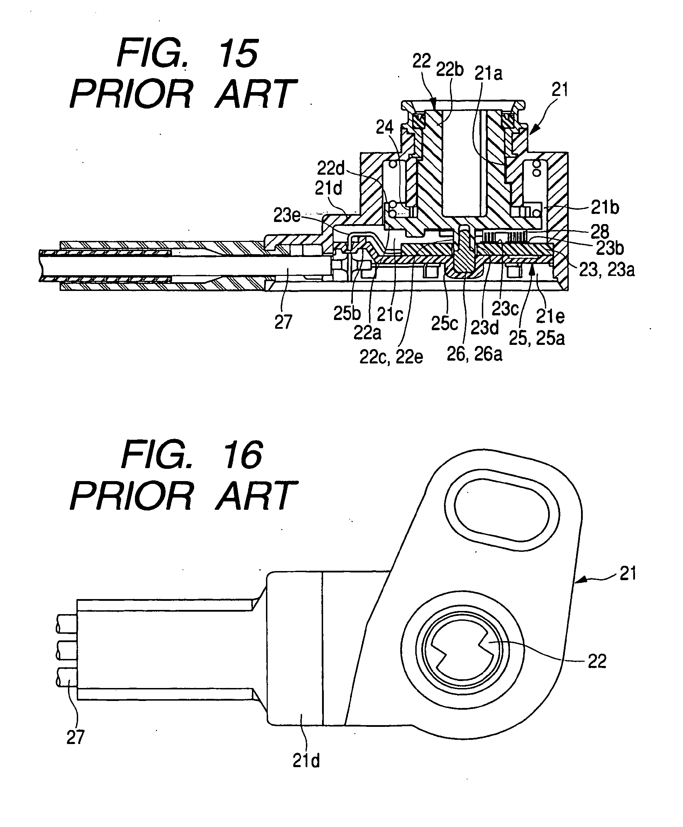

Fig. 15 is a cross sectional view showing a conventional rotary sensor, and Fig. 16 is a plan view showing the conventional rotary sensor.

As shown in Figs. 15 and 16, the conventional rotary sensor is mainly constituted by a rotor 22 having an engaging portion, with which a drive shaft (not shown) such as a throttle shaft of a vehicle engages, a casing 21 for rotatably supporting the rotor 22, a cover member 25 for closing an open end portion 21e of the casing 21, and an angle detecting member housed within the casing 21 to be operated by rotation of the rotor 22 and comprising a moving contact piece 28, a resistor pattern 23b, and a collector pattern 23c.

The casing 21 is made of a synthetic resin material, and has a small-diameter hole portion 21a provided at its end surface, a large-diameter recess 21b provided contiguous to the small-diameter hole portion 21a, a storage portion 21c provided contiguous to the large-diameter recess 21b, and an extending portion 21d projecting outward from a portion of the large-diameter recess 21b to be perpendicular to an axis.

Also, the open end portion 21e is formed below the storage portion 21c as viewed in the Fig. 15, that is, on the other end surface of the casing 21, and so the casing 21 is configured such that its one end surface is opened by the small-diameter hole portion 21a, and its other end surface is opened by the open end portion 21e.

The rotor 22 is made of a synthetic resin material, and has a substantially disk-shaped base 22a, an engaging portion 22b disposed in front of the base 22a to project, and adapted to be inserted into the small-diameter hole portion 21a, a shaft portion 22c located at the rear on the opposite side and provided at a center of rotation of the rotor 22, and a substantially annular-shaped wall portion 22d provided on an outer peripheral edge of the base 22a. The engaging portion 22b and the shaft portion 22c, respectively, are provided to project in a direction of axis of rotation, that is, outward from the base 22a.

Also, the shaft portion 22c has a columnar-shaped spindle portion 22e, and a cylindrical-shaped recess 22f provided centrally of the spindle portion 22e. A support portion 26 described later is engaged in the recess 22f. The rotor 22 rotates reciprocatively about the support portion 26 within a predetermined range of angle of rotation.

A resistor substrate 23 has an insulating base 23a, a resistor pattern 23b and an electric conductor pattern 23c, which are provided on one surface of the insulating base 23a, a through hole 23d provided in the insulating base 23a, and a plurality (for example, three) of terminals 23e arranged on a left side of the insulating base 23a as viewed in the figure and electrically connected to the resistor pattern 23b and the electric conductor pattern 23c. The resistor pattern 23b and the electric conductor pattern 23c constitute a part of those members, which constitute the angle detecting member.

The resistor substrate 23 is arranged in the storage portion 21c of the casing 21 by appropriate means, and at this time a tip end of the shaft portion 22c of the rotor 22 extends beyond one surface (front surface) of the insulating base 23a to be fitted into the through hole 23d of the insulating base 23a of the resistor substrate 23.

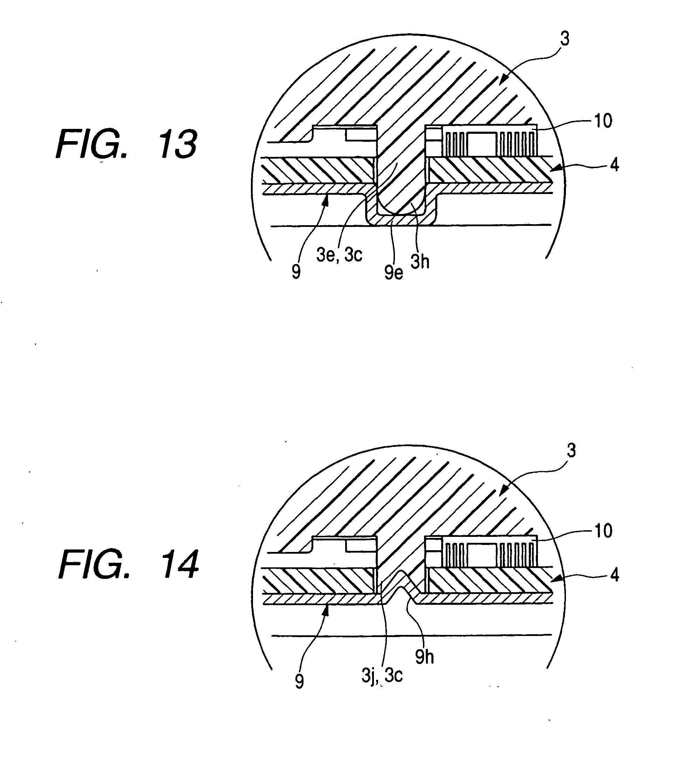

Also, the terminals 23e of the resistor substrate 23 are soldered to wiring harness terminals 27 arranged on a left side as viewed in the figure (see Fig. 14) , the terminals 23e being electrically connected to the wiring harness terminals 27.

A first elastic member 24 is annular-shaped and has a plurality (for example, three) of mountains (not shown) and valleys (not shown), which are alternately provided. That is, the first elastic member 24 constitutes a so-called wave washer (spring washer).

The first elastic member 24 is arranged on the base 22a of of the rotor 22 to be interposed between it and an end surface of the small-diameter hole portion 21a of the casing 21, the rotor 22 being biased downward by the first elastic member 24 as shown in Fig. 15.

The cover member 25 is made of a synthetic resin material, for example, polyphenylene sulfide (PPS), and formed by means of fabrication, the cover member having a flat-plate-shaped cover portion 25a, an extending portion 25b extended from a portion of an outer peripheral edge of the cover portion 25a, and a substantially cylindrical-shaped recess 25c provided substantially centrally of the cover portion 25a. The cover member 25 is arranged to close the one open end portion 21e of the casing 21.

In this state, soldered portions of the wiring harness terminals 27 and of tip ends of the terminals 23e are arranged to be exposed outside from an outer surface of the cover member 25.

The support portion 26 is made of a metallic material such as brass, or the like, and formed by cutting work, the support portion having a columnar-shaped base 26a and a columnar portion 26b projecting outward from one end of the base 26a.

The base 26a is inserted into and arranged in the recess 25c of the cover member 25, such insertion of the base 26a into the recess 25c causing the support portion 26 to be rotatably held in the cover member 25.

Also, the support portion 26 is disposed to be opposed to the shaft portion 22c of the rotor 22, the columnar portion 26b of the support portion 26 being press fitted into the recess 22f of the shaft portion 22c to make the support portion 26 integral with the rotor 22.

The support portion 26 is born by the recess 25c, so that the rotor 22 can rotate on an axis of the shaft portion 22c.

Also, in this state, the support portion 26 and the shaft portion 22c are inserted through the through hole 23d of the resistor substrate 23.

With the conventional rotary sensor constructed in the above manner, in order to close the cover member 25, which closes an open end portion 21e of the casing 21, and soldered portions of the wiring harness terminals 27 and the terminals 23e to provide for a waterproof/dustproof and insulating construction, a sealant (not shown) intended for waterproof/dustproof and insulation is poured onto a whole outer surface of cover member 25 made of a synthetic resin material although not shown. Pouring of the sealant (not shown) closes the casing 21 and the cover member 25.

Also, since such closeness is achieved between the casing 21 and the cover member 25, both of which are made of a synthetic resin material, adequate adherence can be effected between the members of the same system with a favorable adhesion.

With the conventional rotary sensor, however, the support portion 26 made of a metallic material is arranged between the shaft portion 22c of the rotor 22 and the recess 25c of the cover member 25.

The rotor 22 is rotated through the support portion 26 made of a metallic material because abutting portions would be liable to wear when the rotor 22 and the cover member 25, both of which are made of a synthetic resin material, abut directly against each other and the rotor 22 made of a synthetic resin material rotate on the cover member 25 made of a synthetic resin material. That is, the support portion 26 is disposed on a center of rotation of the rotor 22 to function as a pivot shaft.

This has caused a problem that the conventional rotary sensor is increased in the number of parts and cost because of the provision of the support portion 26.

Also, with the conventional rotary sensor, in which a sealant closes the casing 21 together with the cover member 25, the cover member 25 must be formed from a synthetic resin material in order to keep adherence to the sealant favorable, and the cover member 25 must be also formed from a synthetic resin material taking account of a problem of short-circuit among the plurality of terminals 23e or among the wiring harness terminals 27, for which reason the support portion 26 made of a metallic material is used.

### Summary of the Invention

A rotary sensor according to the invention solves the above-mentioned problems, and an object of the invention is to provide an inexpensive rotary sensor, which is reduced in the number of parts.

The present invention provides a rotary sensor according to claim 1.

With such arrangement, the support portion arranged between the rotor and the cover member in conventional rotary sensors is not arranged in the rotary sensor of the present invention, and so it is possible to provide an inexpensive rotary sensor, which is reduced in the number of parts and to improve a sliding property between the rotor and the cover member at the same time. Also, since the extending terminals are provided on the casing, a cover member can be easily formed from a metallic material. Also, a member for rotatably supporting the rotor is not made integral with the casing, which makes it possible to easily form the cover member from a metallic material.

Also, with the rotary sensor of the invention, the projection is provided on the shaft portion, and the recess is provided on the cover member.

With such arrangement, in particular, when the shaft portion is small in diametrical dimension, the provision of the projection on the shaft portion makes manufacture easy as compared with the provision of the recess centrally of the shaft portion, which makes it possible to provide an inexpensive rotary sensor.

Also, with the rotary sensor of the invention, the projection on the shaft portion is provided to be substantially cone-shaped, and the recess on the cover member is provided to assume the form of a substantially inverted cone.

With such arrangement, a center of the substantially cone-shaped shaft portion can be surely fixed to provide a rotary sensor, in which a rotor can be easily rotated and a rotating motion is sure and easy.

Also, with the rotary sensor of the invention, a resistor substrate having a resistor pattern and an electric conductor pattern is arranged in the one open end portion of the casing, a moving contact piece is arranged on the rotor, the resistor pattern and the electric conductor pattern are electrically connected to the extending terminals of the casing, and rotation of the rotor causes the moving contact piece to slide on the resistor pattern and the electric conductor pattern, the angle detecting member is composed of the resistor pattern, the electric conductor pattern, and the moving contact piece, and an elastic member provided on a side of the one open end portion of the casing abuts against the cover member whereby the open end portion is closed by the cover member.

With such arrangement, the angle detecting member is simple in construction and can be closed by the elastic member, so that any sealant for closing as in the prior art is not used, and closing can be effected by the cover member made from a metallic material, which makes it possible to provide an inexpensive rotary sensor.

### Brief Description of the Drawings

Fig. 1 is a cross sectional view showing an embodiment of a rotary sensor of the invention;
Fig. 2 is a plan view showing the embodiment of the rotary sensor of the invention;
Fig. 3 is a first perspective view showing the embodiment of the rotary sensor of the invention;
Fig. 4 is a second perspective view showing the embodiment of the rotary sensor of the invention;
Fig. 5 is an enlarged, cross sectional view relating to the rotary sensor of the invention and showing an essential part of an embodiment of a rotor and a cover member;
Fig. 6 is a plan view showing an embodiment of a resistor substrate associated with the rotary sensor of the invention;
Fig. 7 is a plan view relating to the rotary sensor of the invention and showing an embodiment of a resistor substrate and intermediate terminals;
Fig. 8 is an enlarged, cross sectional view relating to the rotary sensor of the invention and showing an embodiment of a resistor substrate and an intermediate terminal;
Fig. 9 is a perspective view showing an embodiment of an intermediate terminal associated with the rotary sensor of the invention;
Fig. 10 is a plan view showing an embodiment of an intermediate terminal associated with the rotary sensor of the invention;
Fig. 11 is a side view showing an embodiment of an intermediate terminal associated with the rotary sensor of the invention;
Fig. 12 is an enlarged, cross sectional view showing an essential part of a second embodiment of a rotor and a cover member, which are associated with the rotary sensor of the invention;
Fig. 13 is an enlarged, cross sectional view showing an essential part of a third embodiment of a rotor and a cover member, which are associated with the rotary sensor of the invention;
Fig. 14 is an enlarged, cross sectional view showing an essential part of a fourth embodiment of a rotor'and a cover member, which are associated with the rotary sensor of the invention;
Fig. 15 is a cross sectional view showing a conventional rotary sensor; and
Fig. 16 is a plan view showing the conventional rotary sensor.

### Detailed Description of Preferred Embodiments

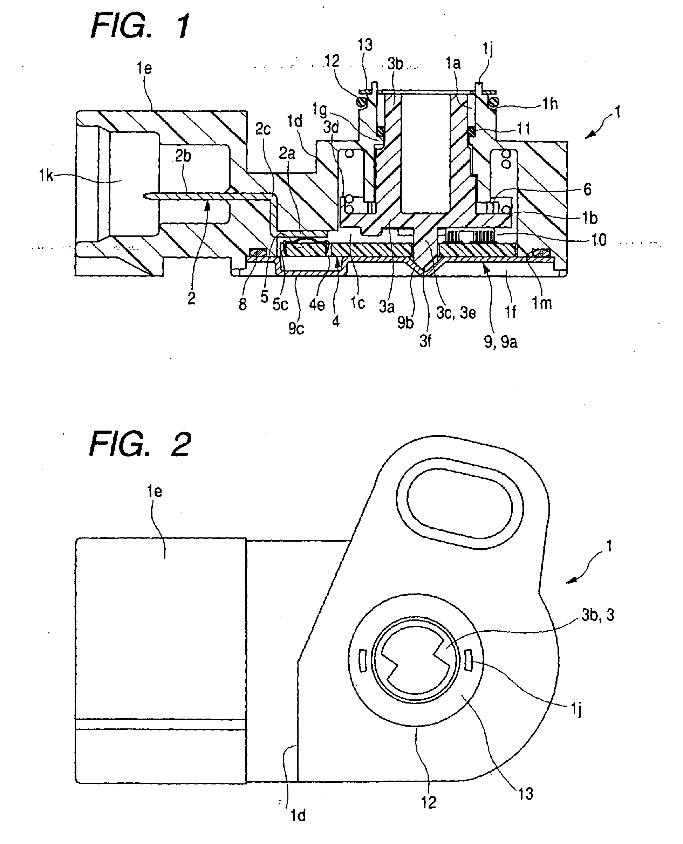

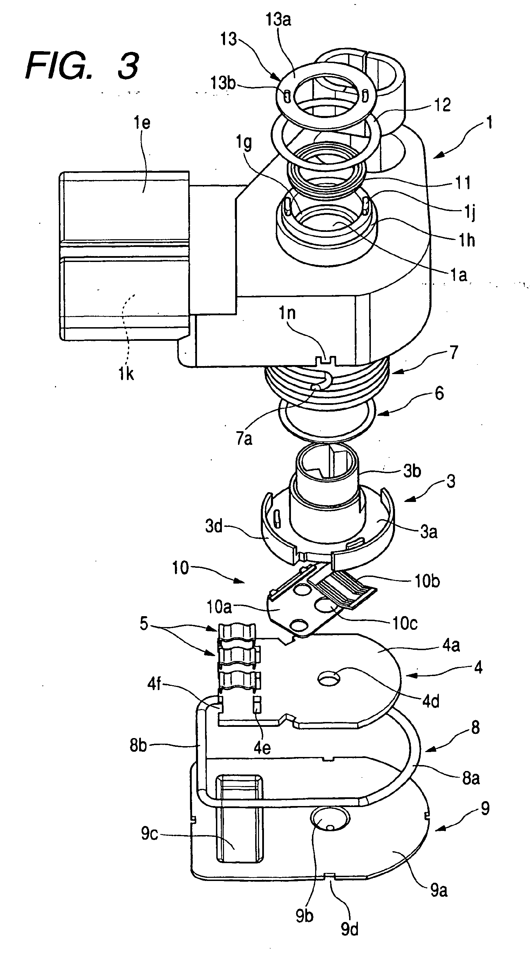

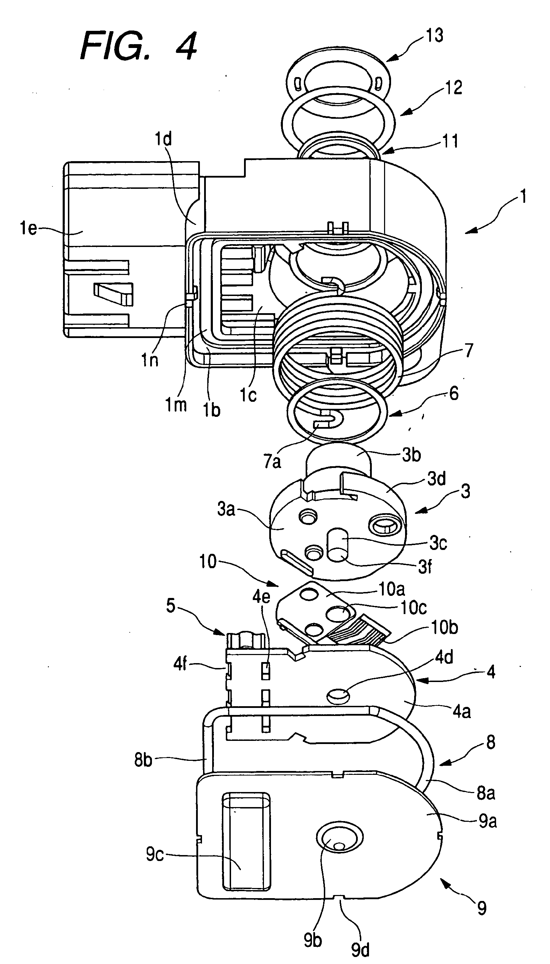

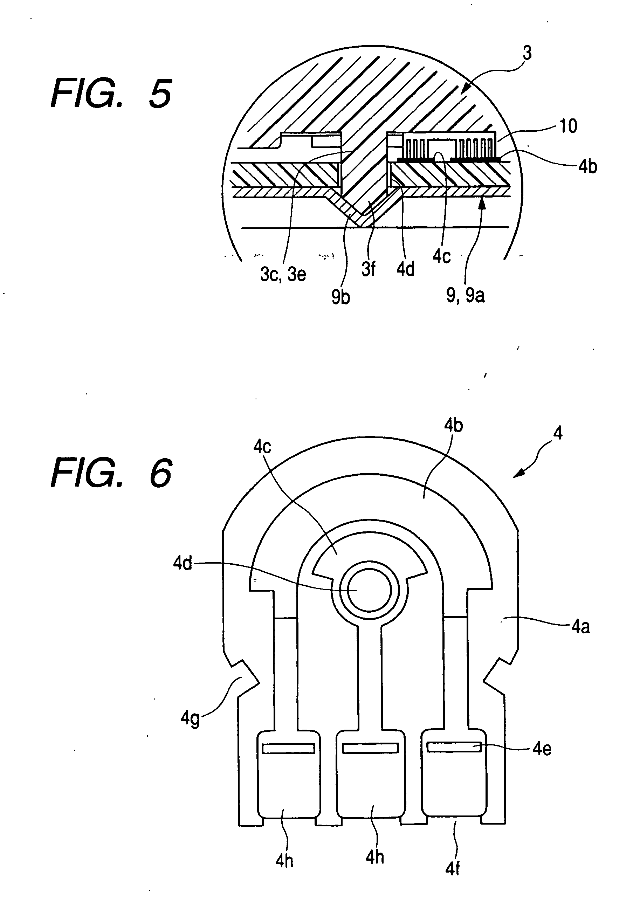

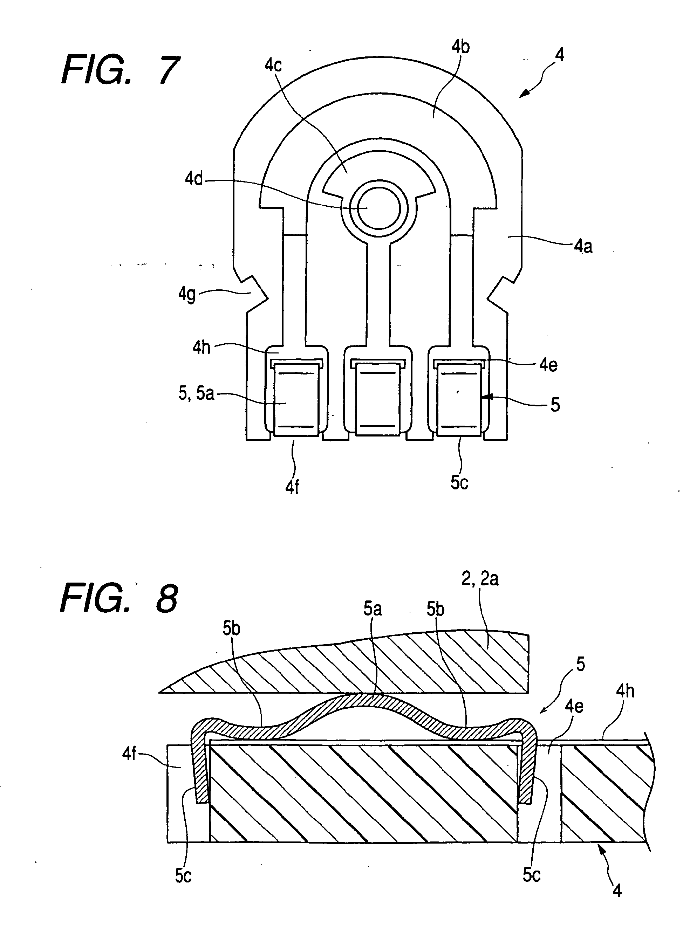

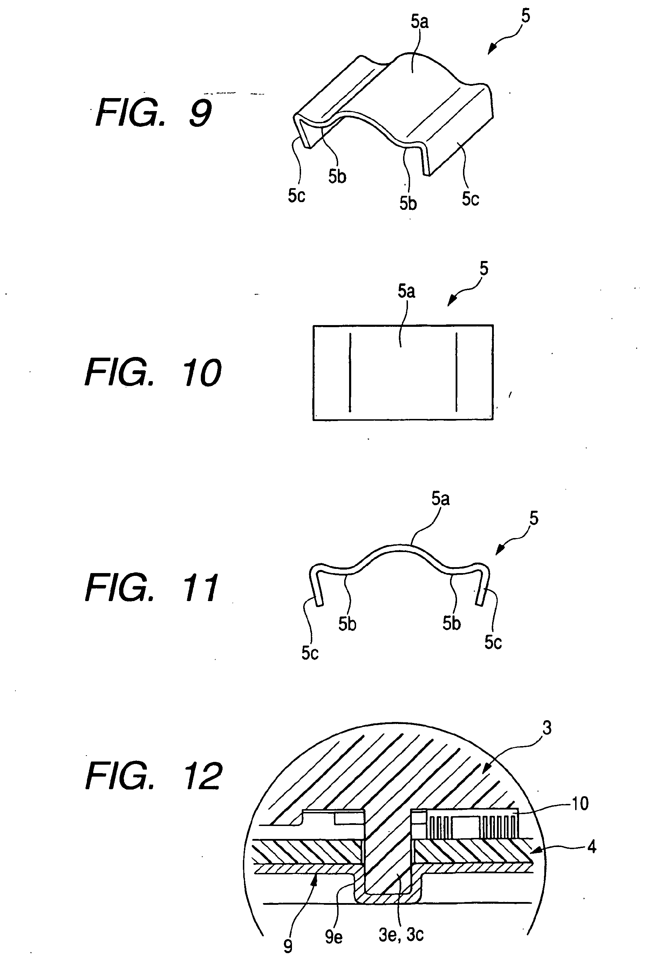

The drawings showing a rotary sensor of the invention will be described below, Fig. 1 is a cross sectional view showing an embodiment of a rotary sensor of the invention, Fig. 2 is a plan view showing the embodiment of the rotary sensor of the invention, Fig. 3 is a first perspective view showing the embodiment of the rotary sensor of the invention, Fig. 4 is a second perspective view showing the embodiment of the rotary sensor of the invention, Fig. 5 is an enlarged, cross sectional view relating to the rotary sensor of the invention and showing an essential part of an embodiment of a rotor and a cover member, Fig. 6 is a plan view showing an embodiment of a resistor substrate associated with the rotary sensor of the invention, Fig. 7 is a plan view relating to the rotary sensor of the invention and showing an embodiment of a resistor substrate and intermediate terminals, Fig. 8 is an enlarged, cross sectional view relating to the rotary sensor of the invention and showing an embodiment of a resistor substrate and an intermediate terminal, Fig. 9 is a perspective view showing an embodiment of an intermediate terminal associated with the rotary sensor of the inventions, Fig. 10 is a plan view showing an embodiment of an intermediate terminal associated with the rotary sensor of the invention, and Fig. 11 is a side view showing an embodiment of an intermediate terminal associated with the rotary sensor of the invention.

As shown in Figs. 1 to 4, a rotary sensor according to the invention is mainly constituted by a rotor 3 having an engaging portion 3b, with which a drive shaft (not shown) such as a throttle shaft of a vehicle engages, a casing 1 for rotatably supporting the rotor 3, a cover member 9 for closing an open end portion 1f of the casing 1, and an angle detecting member housed within the casing 1 to be operated by rotation of the rotor 3 and comprising a moving contact piece 10, a resistor pattern 4b, and a collector pattern 4c.

As shown in Figs. 1 to 4, the casing 1 is made of a synthetic resin material, for example, polybutylene terephthalate (PBT), and formed by means of fabrication, the casing 1 having a small-diameter hole portion 1a provided at its end surface, a large-diameter recess 1b provided contiguous to the small-diameter hole portion 1a, a storage portion 1c provided contiguous to the large-diameter recess 1b and an extending portion 1e projecting outward from a portion of a side wall 1d of the large-diameter recess 1b to be perpendicular to an axis.

Also, the open end portion 1f is formed below the storage portion 1c as viewed in the figure, that is, on the other end surface of the casing 1, and so the casing 1 is configured such that its both end portions are opened, its one end surface being opened by the small-diameter hole portion 1a, and its other end surface being opened by the open end portion 1f.

Also, an annular groove 1m is provided on a tip end surface on a side of the open end portion 1f.

Also, provided on the small-diameter hole portion 1a are an annular-shaped flange 1g, which is disposed in a predetermined location to extend inward, an annular-shaped step 1h provided at its tip end, and a pair of projections 1j provided on its tip end surface to be opposed to each other.

Also, a substantially rectangular cavity 1k is provided substantially centrally of the extending portion 1e.

Extending terminals 2 are made of a conductive metallic material such as brass, or the like, and formed by press working to have a stepwise-shaped cross section, the terminal having an internal terminal portion 2a on its one end side, an external terminal portion 2b on its other end side, and a connecting portion 2c connecting between the internal terminal portion 2a and the external terminal portion 2b.

The extending terminals 2 are formed by, for example, insert molding to be arranged integrally within the extending portion 1e of the casing 1.

At this time, the internal terminal portions 2a of the extending terminals 2 are arranged in the storage portion 1c of the casing 1 with their one surfaces exposed, and the external terminal portions 2b are arranged to project into the cavity 1k.

The rotor 3 is made of a synthetic resin material, for example, polybutylene terephthalate (PBT) , and formed by means of fabrication, the rotor comprising a substantially disk-shaped base 3a, the engaging portion 3b provided in front of the base 3a to project, a shaft portion 3c located at the rear on the opposite side, provided at a center of rotation of the rotor 3, and extended in a direction along an axis of rotation, that is, outward, and a substantially annular-shaped wall portion 3d provided on an outer peripheral edge of the base 3a. The engaging portion 3b and the shaft portion 3c, respectively, are provided to project outward from the base 3a.

Also, the shaft portion 3c projects from the base 3a in the direction of axis of rotation, that is, outward, and has a columnar-shaped spindle portion 3e, and a substantially cone-shaped bearing portion 3f provided on a tip end of the spindle portion 3e and arranged as a projection. The bearing portion 3f is formed so that an angle of its cross section is, for example, approximately 90 degrees.

In addition, an outer peripheral diameter of the engaging portion 3b is somewhat small as compared with a diameter of the small-diameter hole portion 1a, so that a space is ensured to allow the rotor 3 to incline.

A drive shaft (not shown) engages with the engaging portion 3b. And the drive shaft (not shown) rotates reciprocatively within a predetermined range of angle of rotation.

Also, the engaging portion 3b of the rotor 3 is inserted through the small-diameter hole portion 1a of the casing 1, and the base 3a of the rotor 3 is received in the storage portion 1c of the casing 1.

Also, the moving contact piece 10 made of a metallic sheet material and formed by press working is fixed to an underside (on a side toward the shaft portion 3c), shown in Fig. 1, of the base 3a of the rotor 3 by suitable measures such as thermal caulking, or the like. The moving contact piece 10 constitutes a part of those members, which constitute the angle detecting member.

As shown in Fig. 6, a resistor substrate 4 is made of, for example, a synthetic resin material, and has a flat plate-shaped insulating base 4a, a resistor pattern 4b and an electric conductor pattern 4c, which have been provided on one surface of the insulating base 4a by means of, for example, printing, a through hole 4d provided substantially centrally of the insulating base 4a, three rectangular-shaped mount holes 4e provided in locations on respective ends of the resistor pattern 4b on the insulating base 4a and the electric conductor pattern 4c, three first rectangular-shaped notches 4f provided on one end of the insulating base 4a to be opposed to the respective mount holes 4e, and a pair of second rectangular-shaped notches 4g provided on both opposed ends of the insulating base 4a.

Also, the resistor substrate has three electrodes 4h arranged downwardly of the insulating base 4a as viewed in Fig. 6 and electrically connected to the resistor pattern 4b and the electric conductor pattern 4c, respectively. Connection of the respective electrodes 4h is such that the central electrode 4h is connected to the electric conductor pattern 4c and the opposite electrodes 4h with the central electrode 4h therebetween are connected to both ends of the resistor pattern 4b, respectively.

And the rectangular-shaped mount holes 4e are formed in the electrodes 4h, and the notches 4f are formed to be positioned at the tip ends of the electrodes 4h.

The resistor pattern 4b and the electric conductor pattern 4c, respectively, are formed to be sector-shaped about the through hole 4d, the resistor pattern 4b being arranged outside and the electric conductor pattern 4c being arranged inside.

The resistor pattern 4b and the electric conductor pattern 4c constitute a part of those members , which constitute the angle detecting member.

The resistor substrate 4 is placed on a step (not shown) provided on a peripheral edge of the casing 1 toward the open end portion 1f of the storage portion 1c to be held and arranged by thermal caulking of a portion of the casing 1 to be received in the storage portion 1c, and at this time, a tip end of the shaft portion 3c of the rotor 3 extends beyond one surface (front surface) of the insulating base 4a to be fitted into the through hole 4d in the insulating base 4a of the resistor substrate 4.

Also, the moving contact piece 10 is arranged on the resistor pattern 4b and the electric conductor pattern 4c of the resistor substrate 4 to be able to slide thereon.

As shown in Figs. 9 to 11, intermediate terminals 5 are made of a conductive metallic material having the elasticity, and formed by press working, the intermediate terminals having a first contact portion 5a provided centrally and having an arcuate cross section, second contact portions 5b extended outward from both ends of the first contact portion 5a, expanding in a direction opposed to a direction, in which the first contact portion 5a expands, and having an arcuate cross section, and a pair of mount portions 5c extended from respective ends of the second contact portions 5b at a predetermined acute angle. Thus the first contact portion 5a and the second contact portions 5b define a substantially wavy shape.

At the time of press working, the intermediate terminal 5 is punched in, for example, a direction from an arcuate top of the first contact portion 5a, and such punching sometimes forms slight notches, a so-called burr (not shown) on both end surfaces of the first and second contact portions 5a, 5b of the intermediate terminal 5 in a direction, in which the extended mount portions 5c extend.

As shown in Fig. 8, the intermediate terminal 5 is mounted such that the pair of mount portions 5c extended at the acute angle causes the intermediate terminal 5 to interpose therebetween the resistor substrate 4 with one of the mount portions 5c inserted through the mount hole 4e of the resistor substrate 4 and with the other of the mount portions 5c positioned in the notch 4f. At this time, free ends of the pair of mount portions 5c are arranged in positions, in which they do not project from a back side of the resistor substrate 4.

In this state, respective tops of the pair of second contact portions 5b come into elastic contact with the electrode 4h, so that the second contact portions 5b and the electrode 4h are electrically connected to each other. Since the respective tops of the second contact portions 5b are sometimes formed with slight burr (not shown) as described above, such burr cuts into the surface of the electrode 4h to further make sure electric connection.

Also, in this state, the top of the first contact portion 5a comes into elastic contact with an exposed surface of the internal terminal portion 2a of the extending terminal 2 to provide an electric connection between the first contact portion 5a and the extending terminal 2.

That is, the respective electrodes 4h are electrically connected to the extending terminals 2 through the intermediate terminals 5.

A first elastic member 6 is made of a metallic material such as stainless steel, or the like, as shown in Fig. 3, and formed by press working, the first elastic member being annular-shaped to have a plurality of (for example, three) of mountains (not shown) and valleys (not shown), which are alternately provided. The first elastic member 6 constitutes a so-called wave washer (spring washer).

The first elastic member 6 is arranged on the base 3a of the rotor 3 to be interposed between the base 3a and the small-diameter hole portion 1a of the casing 1, the rotor 3 being biased downward by the first elastic member 6 as shown in Fig. 1.

A second elastic member 7 is a so-called coil spring made of, for example, a metallic wire material and formed to be spiral as shown in Figs. 3 and 4, the spring being formed at both ends thereof with U-shaped mount portions 7a, respectively.

The second elastic member 7 is mounted such that one of the mount portions 7a is mounted in the large-diameter recess 1b of the casing 1 by appropriate means and the other of the mount portions 7a is mounted to the base 3a of the rotor 3 by appropriate means in a state, in which the second elastic member 7 is flexed.

In this state, the rotor 3 is rotatively biased by torque (twisting force) of the second elastic member 7 in a clockwise or counterclockwise direction.

A third elastic member 8 is made of, for example, a rubber material and formed to take the form of a substantially torus as shown in Figs. 3 and 4, the the elastic member having an arcuate portion 8a and a C-shaped portion 8b extended from the arcuate portion 8a.

The third elastic member 8 is press fitted into the groove 1m of the casing 1 to be arranged therein.

The cover member 9 is made of a metallic sheet material and formed by press working, as shown in Figs. 3 and 4, the cover member having a substantially flat-plate-shaped cover portion 9a, a first cone-shaped recess 9b provided substantially centrally of the cover portion 9a, a second rectangular-shaped recess 9c provided toward a predetermined end of the cover portion 9a, and a plurality (for example, four) of notches 9d provided in predetermined locations on an outer periphery of the cover portion 9a.

Also, the first recess 9b is formed by extrusion of, for example, a substantially cone-shaped punch die to have a cross section having, for example, an angle of approximately 94 degrees. In addition, in the case of extrusion working with a punch die, a punch is applied to an inner surface of the recess to work the same, and a side being extruded is worked without contacting with any metallic die. Therefore, the cone-shaped inner surface of the recess 9b is precisely worked into a predetermined shape.

Also, the cover member 9 is arranged to close the open end portion 1f of the casing 1 in a closed state as shown in Fig. 1. Closing of the open end portion 1f by means of the cover member 9 is achieved such that mounts 1n formed on the outer peripheral edge of the open end portion 1f are positioned in the notches 9d of the cover member 9 and a whole periphery of the edge portion of the casing 1 on a side of the open end portion 1f in a state shown in Fig. 1 is deformed as by thermal caulking, such deformation of the mounts In causing the cover member 9 to be mounted to the casing 1.

Also, in this state, the third elastic member 8 press fitted into the groove 1m of the casing 1 is elastically deformed to abut against one surface of the cover member 9 near the outer peripheral edge thereof. Elastic deformation of the third elastic member 8 due to press fitting causes the open end portion 1f to be closed by the cover member 9.

Also, in this state, the substantially cone-shaped bearing portion 3f of the shaft portion 3c provided at a center of rotation of the rotor 3 is arranged in the first recess 9b of the cover member 9 as shown in Fig. 5, arrangement of the bearing portion 3f in the first recess 9b enabling the rotor 3 to rotate with the shaft portion 3c as a center.

Also, since the first recess 9b has a cross section of an angle of approximately 94 degrees and the substantially cone-shaped bearing portion 3f has a cross section of an angle of approximately 90 degrees, the bearing portion 3f can be slightly inclined in the first recess 9b. That is, the first recess 9b and the bearing portion 3f are arranged to constitute a so-called pivot configuration.

Accordingly, even when a drive shaft is eccentrically mounted in the engaging portion 3b, shifting of the moving contact piece 10 relative to the resistor pattern 4b can be suppressed as compared with the case where the rotor 3 translates.

Furthermore, in this state, the pairs of mount portions 5c of the intermediate terminals 5 are positioned and arranged in locations opposed to the second recess 9c of the cover member 9, so that the cover member 9 and the pairs of mount portions 5c of the intermediate terminals 5, both of which are made of a metallic material, are electrically insulated (not conducted) further surely from each other by the second recess 9c.

The moving contact piece 10 is made of a metallic material, for example, phosphor bronze or the like, having the elasticity, and formed by press working as shown in Figs . 3 and 4, the moving contact having a substantially rectangular base 10a, a plurality of moving contacts 10b extended from an end of the base 10a, and an insertion hole 10c provided in a predetermined location of the base 10a.

The moving contact piece 10 is fixed in a predetermined location on the base 3a of the rotor 3 by appropriate means such as thermal caulking or the like, and the plurality of moving contacts 10b are arranged in a manner to slide on the resistor pattern 4b and the electric conductor pattern 4c of the resistor substrate 4. At this time, the shaft portion 3c of the rotor 3 is inserted through the insertion hole 10c.

A fourth elastic member 11 is made of, for example, a rubber material and formed to be substantially annular-shaped. The fourth elastic member 11 is placed on the annular-shaped flange 1g of the casing 1 and arranged with an outer peripheral edge portion of the fourth elastic member 11 in elastic contact with the small-diameter hole portion 1a and with an inner peripheral edge portion of the fourth elastic member 11 in elastic contact with the engaging portion 3b of the rotor 3.

Thus the fourth elastic member 11 is arranged in a state, in which it is elastically compressed between the casing 1 and the rotor 3, to close a gap between the casing 1 and the rotor 3.

A fifth elastic member 12 is made of, for example, a rubber material and formed to be substantially annular-shaped. The fifth elastic member 12 is arranged on the annular-shaped step 1h of the casing 1 to elastically contact with a side wall of the annular-shaped step 1h.

In this state, the fifth elastic member 12 is formed to have a diametrical dimension (outer diameter dimension) slightly larger than an outer diameter dimension of the annular-shaped step 1h. That is, the fifth elastic member 12 is arranged to extend outward beyond the outer diameter of the annular-shaped step 1h.

A latch member 13 is made of a metallic sheet material and formed by press working, the latch member having an annular-shaped latch 13a, and a pair of through holes 13b provided in predetermined locations on the latch 13a to be opposed to each other.

The latch member 13 is fixed to a tip end surface of the small-diameter hole portion 1a as by thermal caulking with the pair of projections 1j of the casing 1 inserted through the pair of through holes 13b. Thus fixing of the latch member 13 prevents the fifth elastic member 12 from disengaging from the casing 1.

In this state, the latch member 13 is formed to have a diametrical dimension (outer diameter dimension) slightly smaller than a diametrical dimension (outer diameter dimension) of the fifth elastic member 12. That is, the fifth elastic member 12 is arranged to extend outward beyond the outer diameter of the latch member 13.

Also, while in the above embodiment the shaft portion 3c of the rotor 3, which is a projection, is formed at approximately 90 degrees and the recess 9c of the cover member 9 is formed at approximately 94 degrees, these angles are not limited to such magnitudes but may be of course, for example, substantially the same angle or may have different magnitudes from those of the angles described above.

Subsequently, an explanation will be given to an operation of the rotary sensor according to the invention.

Here, a drive shaft (not shown) such as a throttle shaft of a vehicle engages with the engaging portion 3b of the rotor 3 to operate the rotary sensor according to the invention, as described above.

First, when a drive shaft (not shown) such as a throttle shaft is rotated in, for example, a counterclockwise direction, the engaging portion 3b engaged by the drive shaft is rotated against torque (twisting force) of the second elastic member 7 in a counterclockwise direction.

With such rotation of the engaging portion 3b of the rotor 3, the moving contact piece 10 fixed to the base 3a of the rotor 3 is rotated within a predetermined range of angle of rotation in a counterclockwise direction. At this time, the moving contact piece 10 slides on (contacts) the resistor pattern 4b and the electric conductor pattern 4c of the resistor substrate 4, so that a predetermined resistance generated from the resistor pattern 4b is output via the intermediate terminals 5 from the extending terminals 2.

Subsequently, when torque for rotating the drive shaft (not shown) in a counterclockwise direction is relieved, self-resetting torque (twisting force) of the second elastic member 7 causes the rotor 3 to be rotated in a clockwise direction and the drive shaft (not shown) is returned to its original position. At this time, a predetermined resistance generated from the resistor pattern 4b is also output via the intermediate terminals 5 from the extending terminals 2 in the same manner as described above.

Subsequently, an explanation will be given to an second embodiment of a rotor and a cover member, which are associated with a rotary sensor of the invention.

Fig. 12 is an enlarged view showing an essential part of the second embodiment of the rotor and the cover member, which are associated with the rotary sensor of the invention.

In addition, the same reference numerals or characters denote the same constituents as those of the first embodiment.

As shown in Fig. 12, the shaft portion 3c of the rotor 3 is provided at a center of rotation of the rotor 3 and extended outward, more specifically, downward in the axial direction, the shaft portion 3c being generally constituted only by a columnar-shaped spindle portion 3e and a tip end of the spindle portion 3e functioning as a projection.

In addition, the tip end of the spindle portion 3e is slightly chamfered.

A first recess 9e of the cover member 9 is formed to be generally cylindrical-shaped.

A tip end of the generally cylindrical-shaped spindle portion 3e functioning as the projection is inserted into the first recess 9e, which is generally cylindrical-shaped.

Thus the spindle portion 3e is configured to be rotatively moved in the first recess 9e in the same manner as described above.

Subsequently, an explanation will be given to a third embodiment of a rotor and a cover member, which are associated with a rotary sensor of the invention.

Fig. 13 is an enlarged view showing an essential part of the third embodiment of the rotor and the cover member, which are associated with the rotary sensor of the invention.

In addition, the same reference numerals or characters denote the same constituents as those of the first embodiment.

As shown in Fig. 13, the shaft portion 3c of the rotor 3 is provided at a center of rotation of the rotor 3 and extended outward, more specifically, downward in the axial direction, the shaft portion 3c having a columnar-shaped spindle portion 3e and a semi-spherical bearing portion 3h provided at a tip end of the spindle portion 3e and arranged as a projection. Thus the semi-spherical bearing portion 3h functions as a projection.

A first recess 9e of the cover member 9 is formed to be generally cylindrical-shaped.

The semi-spherical bearing portion 3h functioning as the projection is inserted into the first recess 9e, which is generally cylindrical-shaped.

Thus the spindle portion 3h of the shaft portion 3c is configured to be rotatively moved in the first recess 9e in the same manner as described above.

Since the second and third embodiments are the same in operation as the first embodiment, an explanation therefor is omitted.

In addition, while in the above embodiment the bearing portion 3f on the shaft portion 3c of the rotor 3 is formed to assume the form of a projection and the recess 9c is provided in the cover member 9 to bear the bearing portion 3f of the shaft portion 3c, which is a projection, the embodiment is not limited thereto but may be of course configured such that a bearing portion 3j is formed on the shaft portion 3c of the rotor 3 to assume the form of a recess and a projection 9h is provided on the cover member 9.

Also, in the case of being formed as in the first embodiment, that portion of the cover member 9, which contacts with the rotor 3, can be formed to assume the form of a recess, so that it is possible to precisely form the recess as compared with formation of a projection. Also, that portion of the rotor 3, which contacts with the cover member 9, can be formed to be convex, and in the case where a recess were formed in the portion, a thin-wall portion would be formed at a tip end of an outer peripheral edge of the shaft portion 3c as apparent with reference to Fig. 14, but manufacture is facilitated because such thin-wall portion is not provided.

As described above, with the rotary sensor of the invention, the shaft portion of the rotor is formed from a synthetic resin material, the cover member is formed from a metallic material, a projection is provided on one of the shaft portion and the cover member, a recess is provided on the other of the shaft portion and the cover member, the projection is arranged in the recess, and the rotor is rotated with the shaft portion as a center thereof, whereby a support portion arranged between a rotor and a cover member in conventional rotary sensors is not provided in the rotary sensor of the invention, which makes it possible to provide an inexpensive rotary sensor, which is reduced in the number of parts.

Also, with the rotary sensor of the invention, the projection on the shaft portion is provided to be substantially cone-shaped and the recess on the cover member is provided to assume the form of a substantially inverted cone, whereby a center of the substantially cone-shaped shaft portion can be surely fixed to provide a rotary sensor, in which a rotor can be easily rotated and a rotating motion is sure and easy.

## Claims

1. A rotary sensor comprising a rotor (3) having
a shaft portion (3c), which is provided at a center of rotation and extended outward,
a casing (1) having extending terminals and rotatably supporting the rotor (3),
an angle detecting member operated by rotation of the rotor (3),
a cover member (9) for closing one open end portion of the casing (1) in a close manner, and
an elastic member (8) provided on a side of the one open end portion (1f) of the casing (1), said elastic member abutting against the cover member (9) whereby the open end portion (1f) is closed by the cover member (9), and wherein
the shaft portion (3c) of the rotor (3) is formed from a synthetic resin material,
the cover member (9) is formed from a metallic material,
one of the shaft portion (3c) and the cover member (9) is formed providing a projection (3f; 9h)
a recess (9b) is provided on the other of the shaft portion (3c) and the cover member (9),
the projection (3f; 9h) on one of the members is arranged in the recess (9b; 3j) on the other of the members, and the rotor (3) is rotated with the shaft portion (3c) as a center.

2. The rotary sensor according to claim 1, wherein the projection (3f) is provided on the shaft portion (3c), and the recess (9b) is provided on the cover member (9).

3. The rotary sensor according to claim 2, wherein the projection (3f) on the shaft portion (3c) is provided to be substantially cone-shaped, and the recess (9b) on the cover member (9) is provided to assume the form of a substantially inverted cone.

4. The rotary sensor according to any of claims 1 to 3, wherein
a resistor substrate (4) having a resistor pattern (4b) and an electric conductor pattern (4c) is arranged in the one open end portion of the casing (1),
a moving contact piece (10) is arranged on the rotor (3),
the resistor pattern (4b) and the electric conductor pattern (4c) are electrically connected to the extending terminals (2) of the casing (1), and rotation of the rotor (3) causes the moving contact piece (10) to slide on the resistor pattern (4b) and the electric conductor pattern (4c), and
the angle detecting member is composed of the resistor pattern (4b), the electric conductor pattern (4c), and the moving contact piece (10).

## Patentansprüche

1. Drehsensor mit einem Rotationsglied (3), das einen Schaftbereich (3c) aufweist, der an einem Rotationszentrum vorgesehen ist und sich nach außen fortsetzt,
mit einem Gehäuse (1), das Erstreckungsanschlüsse aufweist und das Rotationsglied (3) drehbar abstützt,
einem Winkeldetektionselelment, das durch Rotation des Rotationsglieds (3) betätigt wird,
einem Abdeckelement (9) zum Verschließen von einem offenen Endbereich des Gehäuses (1) in dichter Weise, und mit
einem elastischen Element (8), das auf einer Seite von dem einen offenen Endbereich (1f) des Gehäuses (1) vorgesehen ist, wobei das elastische Element an dem Abdeckelement (9) anliegt, so dass der offene Endbereich (1 f) durch das Abdeckelement (9) verschlossen ist, und
wobei der Schaftbereich (3c) des Rotationsglieds (3) aus einem Kunstharzmaterial gebildet ist,
wobei das Abdeckelement (9) aus einem metallischen Material gebildet ist, wobei der Schaftbereich (3c) oder das Abdeckelement (9) unter Bildung eines Vorsprungs (3f, 9h) ausgebildet ist,
wobei eine Vertiefung (9b) in dem jeweils anderen Element von dem Schaftbereich (3c) und dem Abdeckelement (9) gebildet ist,
wobei der Vorsprung (3f; 9h) an dem einen der Elemente in der Vertiefung (9b; 3j) in dem jeweils anderen Element angeordnet ist und das Rotationsglied (3) mit dem Schaftbereich (3c) als Zentrum rotationsmäßig bewegt wird.

2. Drehsensor nach Anspruch 1,
wobei der Vorsprung (3f) an dem Schaftbereich (3c) vorgesehen ist und die Vertiefung (9b) in dem Abdeckelement (9) vorgesehen ist.

3. Drehsensor nach Anspruch 2,
wobei der Vorsprung (3f) an dem Schaftbereich (3c) im Wesentlichen kegelförmig ausgebildet ist und die Vertiefung (9b) in dem Abdeckelement (9) im Wesentlichen umgekehrt kegelförmig ausgebildet ist.

4. Drehsensor nach einem der Ansprüche 1 bis 3,
wobei ein wderstandssubstrat (4) mit einem Widerstandsmuster (4b) und einem elektrischen Leitermuster (4c) in dem einen offenen Endbereich des Gehäuses (1) angeordnet ist,
wobei ein bewegliches Kontaktstück (10) an dem Rotationsglied (3) angeordnet ist,
wobei das wderstandsmuster (4b) und das elektrische Leitermuster (4c) mit den Erstreckungsanschlüssen (2) des Gehäuses (1) elektrisch verbunden sind und eine Rotationsbewegung des Rotationsglieds (3) das bewegliche Kontaktstück (10) dazu veranlasst, eine Gleitbewegung auf dem Widerstandsmuster (4b) und dem elektrischen Leitermuster (4c) auszuführen, und wobei das Winkeldetektionselement aus dem Widerstandsmuster (4b), dem elektrischen Leitermuster (4c) und dem beweglichen Kontaktstück (10) gebildet ist.

## Revendications

1. Capteur rotatif comprenant un rotor (3) comportant :
une partie axe (3c) qui est prévue au niveau d'un centre de rotation et s'étend vers l'extérieur,
un boîtier (1) comportant des bornes saillantes et supportant à rotation le rotor (3),
un élément de détection d'angle actionné par la rotation du rotor (3),
un élément formant couvercle (9) pour fermer une partie d'extrémité ouverte du boîtier (1) de façon étroite, et
un élément élastique (8) placé sur un côté de ladite partie d'extrémité ouverte (1f) du boîtier (1), ledit élément élastique étant en appui sur l'élément formant couvercle (9), moyennant quoi la partie d'extrémité ouverte (1f) est fermée par l'élément formant couvercle (9), et dans lequel :
la partie axe (3c) du rotor (3) est formée à partir d'un matériau de type résine synthétique,
l'élément formant couvercle (9) est formé à partir d'un matériau métallique,
un élément parmi la partie axe (3c) et l'élément formant couvercle (9) est pourvu d'une saillie (3f ; 9h),
un évidement (9b) est prévu sur l'autre élément parmi la partie axe (3c) et l'élément formant couvercle (9),
la saillie (3f ; 9h) présente sur l'un des éléments est disposée dans l'évidement (9b ; 3j) de l'autre des éléments, et le rotor (3) tourne avec la partie axe (3c) comme centre.

2. Capteur rotatif selon la revendication 1, dans lequel la saillie (3f) est prévue sur la partie axe (3c), et l'évidement (9b) est prévu sur l'élément formant couvercle (9).

3. Capteur rotatif selon la revendication 2, dans lequel la saillie (3f) sur la partie axe (3c) est substantiellement en forme de cône, et l'évidement (9b) sur l'élément formant couvercle (9) est prévu pour prendre la forme d'un cône substantiellement inversé.

4. Capteur rotatif selon l'une quelconque des revendications 1 à 3, dans lequel :
un substrat de résistance (4) comportant un dessin de résistance (4b) et un dessin de conducteur électrique (4c) est placé dans la partie d'extrémité ouverte du boîtier (1),
une pièce de contact mobile (10) est placée sur le rotor (3),
le dessin de résistance (4b) et le dessin de conducteur électrique (4c) sont connectés électriquement aux bornes saillantes (2) du boîtier (1), et la rotation du rotor (3) provoque le glissement de la pièce de contact mobile (10) sur le dessin de résistance (4b) et le dessin de conducteur électrique (4c), et
l'élément de détection d'angle est composé du dessin de résistance (4b), du dessin de conducteur électrique (4c) et de la pièce de contact mobile (10).
